# EUROPÄISCHE PATENTANMELDUNG

(11) **EP 4 388 885 A1**
(43) Veröffentlichungstag der Anmeldung: **26.06.2024**
(21) Anmeldenummer: 22216508.6
(22) Anmeldetag: 23.12.2022
(51) Int. Cl.: A23G 3/02, A23P 30/10

(54) **FORMMASCHINE ZUM HERSTELLEN VON FORMSTABILEN PRODUKTEN AUS EINER MASSE MIT EINER VISKOSITÄT IM BEREICH VON 10 BIS 80 PAS**

(71) Anmelder: Krüger und Salecker Maschinenbau GmbH & Co. KG, 23611 Bad Schwartau (DE)
(72) Erfinder: Rose, Kay, 23617 Stockelsdorf (DE); Drzewiecki, Tim, 23623 Ratekau (DE)
(74) Vertreter: Patentanwälte Hemmer Lindfeld Frese Partnerschaft mbB

(57) **Zusammenfassung**

Die Erfindung betrifft eine Formmaschine zum Herstellen von formstabilen Produkten aus einer Masse (8) mit einer Viskosität im Bereich von 10000 bis 80000 mPas, aufweisend eine rotierend angetriebene Formwalze (2) mit in deren Mantelfläche ausgebildeten Formvertiefungen (4), zumindest eine beabstandet zu der Formwalze (2) angeordnete, rotierend angetriebene und beheizte Füllwalze (22,24) , deren Drehachse sich parallel zu einer Drehachse der Formwalze (2) erstreckt, ein zwischen der Füllwalze (22,24) und der Formwalze (2) angeordnetes Abstandselement (26), welches mit der Mantelfläche der Füllwalze (22, 24) und mit der Mantelfläche der Formwalze (2) in Kontakt ist, und ein die Formwalze (2) in einem Umfangsbereich umschließendes und sich in einem Entnahmebereich (10) von der Formwalze (2) wegerstreckendes Entnahmeband (14), sowie ein Verfahren zur Herstellung von Produkten aus einer sich durch Abkühlung verfestigenden Masse.

## Beschreibung

Die Erfindung betrifft eine Formmaschine zum Herstellen von formstabilen Produkten aus einer Masse mit einer Viskosität im Bereich von 10000 bis 80000 mPas, wobei die Masse sich nach der Formgebung verfestigt.

Derartige Produkte können beispielsweise Nahrungsmittel sein, beispielsweise Fruchtgummis. Solche Fruchtgummis werden bislang z.B. in der Weise hergestellt, dass Negativformen der Produkte in ein Stärkebett gedrückt werden, welche im Anschluss mit der erwärmten Fruchtgummimasse gefüllt werden. Zum Aushärten müssen die Formen über mehrere Stunden kühlen, damit die Produkte so weit gelieren können, dass sie aus der Form entnommen werden können, wobei die Form zerstört wird und das Stärkemehl gegebenenfalls zum Herstellen neuer Formen wiederverwendet werden kann. Dieser Prozess ist sehr aufwendig und zeitintensiv und benötigt viel Platz zur Lagerung der Formen während der Aushärtung der Produkte.

Vor dem Hintergrund dieser Problematik ist es Aufgabe der Erfindung, eine Formmaschine zum Herstellen von Produkten aus einer sich verfestigenden Masse, welche eine Viskosität zwischen 10000 und 80000 mPas aufweist, und ein entsprechendes Verfahren zur Herstellung solcher Produkte bereitzustellen, welche eine schnellere und kostengünstigere Herstellung ermöglichen.

Diese Aufgabe wird gelöst durch eine Formmaschine mit den in Anspruch 1 angegeben Merkmalen sowie durch ein Verfahren mit den in Anspruch 11 angegebenen Merkmalen. Bevorzugte Ausführungsformen ergeben sich aus den Unteransprüchen, der nachfolgenden Beschreibung sowie den beigefügten Figuren.

Die erfindungsgemäße Formmaschine ist ausgestaltet und vorgesehen zum Herstellen von Produkten aus einer Masse mit einer Viskosität im Bereich von 10000 bis 80000 mPas. Dabei handelt es sich um eine Masse, welche vor dem Formen die genannte Viskosität hat und sich dann verfestigt, beispielsweise durch Gelieren oder Abkühlen, und dadurch einen im Wesentlichen formstabilen Zustand annimmt. Solche Produkte können z.B. Nahrungsmittel oder Nahrungsmittel mit aktiven oder funktionalen Zusatzstoffen oder andere fließfähige Stoffe mit entsprechender Viskosität sein, die sich beispielsweise durch einen Aktivator oder Abkühlen verfestigen. So kann die Masse z.B. eine Fruchtgummimasse sein, sodass die Formmaschine zur Produktion von Fruchtgummis ausgebildet ist. Eine solche Masse kann jedoch auch eine andere Masse zur Herstellung von Süßwaren oder auch nicht süßen Lebensmitteln sein. Darüber hinaus können auch andere Produkte mit der Formmaschine gefertigt werden, für welche eine Masse, welche in dem genannten Viskositätsbereich bereitgestellt wird, in einer Form aushärten muss. Besonders bevorzugt ist die Masse eine Geliermittel enthaltende Masse, wobei die Masse z.B. beim Abkühlen und/oder nach einer gewissen Zeit geliert und am Ende eine elastische beziehungsweise gelartige Struktur annimmt.

Die Formmaschine weist eine rotierend angetriebene Formwalze auf, in deren Mantel- bzw. Oberfläche Formvertiefungen beziehungsweise Formnester ausgebildet sind, welche die Negativform des zu formenden Produktes aufweisen. Die Formwalze kann beispielsweise aus Metall, z.B. Aluminium, oder Kunststoff gefertigt sein. Die Walze rotiert um ihre Längsachse. Dabei wird die Formwalze kontinuierlich drehend angetrieben, sodass ein kontinuierlicher Formprozess mit der Formmaschine realisiert wird. Während der kontinuierlichen Drehung werden die Formvertiefungen mit der Masse, welche eine Viskosität im Bereich von 10000 mPas bis 80000 mPas hat, gefüllt und an einer anderen Position werden die fest gewordenen Produkte aus den Formvertiefungen wieder entnommen. Das Verfestigen der Masse erfolgt während der Drehung der Walze in den Formvertiefungen.

Die Formmaschine weist zumindest eine beabstandet zu der Formwalze angeordnete, ebenfalls rotierend angetriebene und beheizte Füllwalze auf. Die Drehachse der Füllwalze erstreckt sich parallel zu einer Drehachse der Formwalze. Die Formwalze und die zumindest eine Füllwalze können über einen gemeinsamen Antrieb angetrieben werden, aber auch mit separaten Antrieben, insbesondere elektrischen Antriebsmotoren versehen sein. Die Formwalze und die Füllwalze werden vorzugsweise so angetrieben, dass ihre Mantel- bzw. Oberflächen sich im Wesentlichen mit derselben Geschwindigkeit bewegen. Das heißt bei unterschiedlichen Durchmessern werden die Walzen vorzugsweise unterschiedlich schnell angetrieben. Bevorzugt ist die Formwalze im Durchmesser größer als die Füllwalze, sodass die Füllwalze mit einer höheren Drehgeschwindigkeit angetrieben wird. Zwischen der zumindest einen Füllwalze und der Formwalze ist zumindest ein Abstandselement angeordnet, welches den Spalt beziehungsweise Freiraum zwischen der Füllwalze und der Formwalze verschließt. So ist das Abstandselement mit der Mantelfläche der Füllwalze und mit der Mantelfläche der Formwalze in Kontakt. Die Füllwalze kann somit die Masse der Formwalze zuführen und in die Formvertiefungen an der Mantelfläche der Formwalze drücken. Das Abstandselement ist in seiner Länge zwischen Füllwalze und Formwalze derart kurz gestaltet, dass es im Bereich des Abstandselementes nicht zu einem unerwünschten Verfestigen der Masse kommt, bevor diese die Formvertiefungen erreicht. Das Abstandselement kann gegebenenfalls auch beheizt sein, um ein Verfestigen beziehungsweise Erstarren der Masse vor dem Eintritt in die Formvertiefungen zu verhindern. Das heißt, über die Füllwalze und gegebenenfalls das Abstandselement kann die Masse während der Zuführung temperiert werden, sodass die Viskosität in dem genannten Bereich gehalten wird, welcher es ermöglicht, dass die Masse in die Formvertiefungen fließt, beziehungsweise gestrichen wird. Dadurch, dass das Abstandselement auf der Mantelfläche der Formwalze gleitet, wird die Masse von den Mantelflächenbereichen neben den Formvertiefungen abgestrichen, sodass dann, wenn die Mantelfläche der Formwalze das Abstandselement passiert hat, nur noch die Masse in den Formvertiefungen verbleibt und dort aushärten kann.

Die Formmaschine weist ferner ein die Formwalze in einem Umfangsbereich umschließendes und sich in einem Entnahmebereich von der Formwalze wegerstreckendes Entnahmeband auf. Die in den Formvertiefungen liegenden Produkte treten mit dem Entnahmeband in Kontakt und werden über das Entnahmeband, welches sich in tangentialer Richtung von der Formwalze wegerstreckt, aus den Formvertiefungen entnommen bzw. herausgezogen und von der Formwalze weg transportiert. Das Entnahmeband wird in dem umschließenden Umfangsbereich mit der Formwalze mitbewegt. In diesem Umfangsbereich können die Produkte mit dem Entnahmeband in Anlage treten. An der Stelle, an welcher das Entnahmeband sich in tangentialer Richtung von der Formwalze wegerstreckt, werden die Produkte dann aus den Formvertiefungen entnommen. Vorzugweise erstreckt sich das Entnahmeband an der Unterseite der Formwalze im Wesentlichen in horizontaler Richtung von der Formwalze weg. Die Füllwalze ist vorzugsweise an der Oberseite der Formwalze angeordnet, sodass die Masse der Formwalze an der Oberseite zugeführt wird, wobei die Zufuhr der Masse durch die Schwerkraft begünstigt wird. Während der Drehung der Formwalze von der Oberseite zur Unterseite verbleibt die Masse in den Formvertiefungen und kann während dieser Bewegung in den Formvertiefungen so weit aushärten, dass das Produkt derart formstabil ist, dass es aus der Formvertiefung entnommen werden kann.

Diese Formmaschine hat den Vorteil, dass Fruchtgummis und ähnliche Produkte in einem kontinuierlichen Prozess hergestellt werden können und dass keine Aushärtung in der Form über mehrere Stunden erforderlich ist. Die Zufuhr der erwärmten und temperierten Masse zu der Formwalze ermöglicht es, die Masse mit einer Viskosität in dem oben genannten Viskositätsbereich zuzuführen, so dass sie eine ausreichende Fließfähigkeit hat, um die Formvertiefungen zu füllen, im Anschluss aber derart schnell verfestigt beziehungsweise aushärtet, dass die Produkte nach kurzer Zeit aus den Formvertiefungen entnommen werden können.

Die Formwalze und die Füllwalze sind vorzugsweise mit zumindest einem Drehantrieb derart verbunden, dass die Formwalze und die zumindest eine Füllwalze in entgegengesetzten Drehrichtungen angetrieben werden. So wird die Masse von der Füllwalze zu der Formwalze hinbewegt und durch die entgegengesetzte Bewegung in den Spalt zwischen Form- und Füllwalze gedrückt.

Das Entnahmeband ist vorzugsweise derart angetrieben, dass sich die Bandoberfläche in dem die Formwalze umschließende Umfangsbereich mit der Mantel- bzw. Oberfläche der Formwalze bewegt, das heißt mit derselben Geschwindigkeit wie die Mantelfläche der Formwalze. Das Entnahmeband weist vorzugsweise einen separaten Antrieb auf oder ist mit dem Antrieb der Formwalze über geeignete Getriebemittel gekoppelt, sodass es sich in entsprechender Geschwindigkeit bewegt. Alternativ kann es direkt durch die Formwalze angetrieben werden. Das Entnahmeband ist als Schlaufe ausgebildet, welche über entsprechende Rollen oder Walzen umgelenkt wird. Die Oberfläche des Entnahmebandes bewegt sich in einer Richtung von der Formwalze weg, so dass die entnommenen Produkte von der Formwalze wegbewegt werden. An seinem Ende kann das Entnahmeband gegebenenfalls die Produkte an weitere Fördereinrichtungen übergeben oder sie können von Hand abgenommen werden.

Gemäß einer weiteren Ausgestaltung der Erfindung weist die Formmaschine eine geheizte Produktzuführeinrichtung auf, welche dazu ausgebildet ist, die zu formende Masse definiert zu temperieren, vorzugsweise auf eine Temperatur ≤90°C, wobei die Masse eine Viskosität im Bereich von 10000 bis 80000 mPas aufweist. Eine solche Viskosität sichert die Formbarkeit in den Formvertiefungen, ermöglicht aber bei einer durch Abkühlen aushärtenden Masse eine schnelle Oberflächenverfestigung in den Formvertiefungen. Die Produktzuführeinrichtung kann einen externen Kocher und/oder Mischer aufweisen. Die Produktzuführeinrichtung ist ferner so ausgebildet, dass die so temperierte und in ihrer Viskosität eingestellte Masse der Füllwalze, beziehungsweise in den Raum zwischen Füllwalze und Formwalze zugeführt wird. Dies erfolgt vorzugsweise kontinuierlich. In einer alternativen Ausführungsform könnte vor der Füllwalze ein Puffervolumen ausgebildet sein, in dem stets ein solches Volumen der Masse vorgehalten wird, dass die Produktion beziehungsweise das Formen durch die Formwalze kontinuierlich weiterlaufen kann, auch wenn die Masse aus der Produktzuführeinrichtung diskontinuierlich oder chargenweise zugeführt wird . Die Temperierung von ≤ 90°C gewährleistet ein schnelles Aushärten der Masse in den Formvertiefungen der Füllwalze.

Das Entnahmeband ist vorzugsweise in zumindest einem Abschnitt, welcher in dem sich von der der Formwalze wegerstreckenden Teil gelegen ist, gekühlt. Durch die Kühlung des Entnahmebandes wird das weitere Aushärten beziehungsweise Verfestigen der aus der Formwalze entnommenen Produkte beschleunigt, sodass diese dann von dem Entnahmeband problemlos abgenommen und weiterverarbeitet, beispielsweise verpackt werden können. Das Entnahmeband wird vorzugsweise auf eine Temperatur ≤ 20°C und weiter bevorzugt ≤10°C gekühlt. Zur Kühlung kann sich das Entnahmeband durch einen Kühltunnel erstrecken, sodass nicht nur das Band gekühlt wird, sondern auch die auf dem Band angeordneten Produkte gekühlt werden, wenn sie den Kühltunnel passieren. Alternativ oder zusätzlich kann unterhalb des Entnahmebandes eine Kühleinrichtung angeordnet sein. Beispielsweise kann das Entnahmeband über eine gekühlte Fläche geführt werden, sodass damit das Entnahmeband und die darauf angeordneten Produkte von unten gekühlt werden.

Die Formvertiefung und das Entnahmeband sind vorzugsweise so ausgestaltet, dass eine Haftkraft beziehungsweise die Adhäsion zwischen dem Entnahmeband und dem aus der Masse geformtem Produkt größer ist als eine Haftkraft beziehungsweise Adhäsion zwischen der Formvertiefung und dem aus der Masse geformten Produkt. Dadurch wird erreicht, dass das Produkt an dem Entnahmeband anhaftet, wenn das Entnahmeband in dem Umschlingungsbereich an der Mantelfläche der Formwalze entlangläuft. In dem Bereich, in dem das Entnahmeband dann tangential von der Mantelfläche der Formwalze geführt ist, zieht das Entnahmeband durch die Haftkraft zwischen Entnahmeband und Produkt das Produkt aus den Formvertiefungen heraus. Material und Struktur des Entnahmebandes sind daher vorzugsweise so an das Produkt angepasst, dass eine gewünschte Anhaftung zwischen Produkt und Entnahmeband erreicht wird. Gegebenenfalls könnte ein Haftmittel auf das Entnahmeband aufgebracht werden, um das Anhaften der Produkte zu verbessern. Alternativ oder zusätzlich könnten die Formvertiefungen vor dem Einfüllen der Masse auch mit einem Trennmittel beschichtet werden, um die Haftkraft zwischen dem Produkt und der Oberfläche der Formvertiefung zu verringen. Ferner sind die Formvertiefungen bevorzugt so ausgebildet, dass keine Hinterschneidungen das Auslösen des Produktes erschweren, d.h. bevorzugt kein Formschluss zwischen dem Produkt und der Formvertiefung entsteht.

Gemäß einer weiteren bevorzugten Ausgestaltung der Erfindung weisen die Formvertiefungen jeweils eine geschlossene Oberfläche auf, welche weiter bevorzugt frei von Entformungsmitteln ist. Das heißt gemäß dieser Ausgestaltung sind keine Entformungsmittel vorgesehen, wie beispielsweise Luftdüsen oder bewegliche Stempel, welche das Produkt aus der Formvertiefung herausdrücken. Vorzugsweise wird das Produkt lediglich durch das Entnahmeband aus der Formvertiefung gezogen. Somit sind keine weiteren Mechaniken zum Entformen des Produktes aus der Formvertiefung erforderlich. Die begünstigt die Reinigbarkeit der Formvertiefungen und verbessert die Oberfläche der Produkte. Ferner ermöglicht dies einen einfachen Aufbau der Formwalze, da keine Luftzuführungen oder beweglichen Elemente im Inneren der Formwalze erforderlich sind.

Gemäß einer weiteren möglichen Ausführungsform der Erfindung weist die Formmaschine zwei rotierend angetriebene Füllwalzen auf, welche beabstandet zueinander angeordnet sind. Beide Füllwalzen sind vorzugsweise beheizt und vorzugsweise oberhalb der Formwalze angeordnet. So wird zwischen den beiden Füllwalzen oberhalb der Formwalze ein Freiraum gebildet, welcher der Aufnahme der zu formenden Masse dient. Zwischen jeder der Füllwalzen und der Formwalze ist vorzugsweise jeweils ein Abstandselement angeordnet, wie es oben beschrieben wurde und welche mit der Mantelfläche einer der Füllwalzen und mit der Mantelfläche der Formwalze in Kontakt ist. So wird zum einen der Freiraum zwischen Füllwalze und Mantelfläche der Formwalze verschlossen. Zum anderen wird ein Abstand zwischen der Füllwalze und der Formwalze geschaffen, der sicherstellt, dass in diesem Bereich ausreichend Masse vorgehalten wird, um die Formvertiefungen vollständig zu füllen. Ferner ermöglicht ein Aufnahmeraum für die Masse oberhalb der Formwalze, in diesem Bereich weitere Produktbestandteile der Masse zuzumischen, beispielsweise feste Bestandteile, welche im Inneren der Masse eingebettet werden sollen. Dies könnten beispielsweise Fruchtstücke sein.

Die Füllwalzen sind vorzugsweise gemeinsam mit der Formwalze über einen gemeinsamen Antrieb angetrieben, können jedoch auch separate Antriebe aufweisen, welche dann vorzugsweise mit dem Antrieb der Formwalze synchronisiert sind, so dass die Füllwalzen sich mit einer Geschwindigkeit drehen, bei welcher die Oberflächengeschwindigkeit im Wesentlichen der Oberflächengeschwindigkeit der Formwalze entspricht. Die beiden Füllwalzen drehen sich vorzugsweise in entgegengesetzten Richtungen, sodass eine der Füllwalzen entgegengesetzt zu der Formwalze und die anderer Füllwalze sich in derselben Drehrichtung wie die Formwalze dreht. Dabei dreht sich vorzugsweise diejenige Füllwalze, welche in der Drehrichtung der Formwalze weiter hinten gelegen ist, in derselben Drehrichtung wie die Formwalze.

Der Entnahmebereich, in welchem sich das Entnahmeband im Wesentlichen in tangentialer Richtung von der Formwalze wegerstreckt, ist vorzugsweise von einem Füllbereich, das heißt dem Bereich, in dem die Füllwalze angeordnet ist, in Umfangsrichtung der Formwalze in einem Winkel von mindestes 90°, weiter bevorzugt größer als 150° und besonders bevorzugt von im Wesentlichen 180° beabstandet. Dadurch wird erreicht, dass die Produkte über einen Drehwinkel von mehr als 90° bzw. mehr als 150°, vorzugsweise im Wesentlichen 180° in den Formvertiefungen verbleiben und in der Zeitdauer dieser Bewegung dort fest werden können. Die Formwalze bewegt sich vorzugsweise mit einer Oberflächengeschwindigkeit zwischen 0,5 und 5 Meter pro Minute. Dabei kann die Geschwindigkeit an die Aushärtezeit der Produkte angepasst werden, sodass sichergestellt ist, dass zumindest die Oberflächen der Produkte soweit ausgehärtet sind, dass die Produkte aus den Formvertiefungen entnommen werden können.

Neben der vorangehenden beschrieben Formmaschine ist Gegenstand der Erfindung ein Verfahren zum Herstellen von formstabilen Produkten aus einer Masse mit einer Viskosität im Bereich von 10000 bis 80000 mPas. Dieses Verfahren wird bevorzugt unter Verwendung einer Formmaschine, wie sie vorangehend beschrieben wurde, ausgeführt. Bevorzugte Ausgestaltungen der Formmaschine, welche zuvor beschrieben worden sind, sind auch als bevorzugte Verfahrensmerkmale anzusehen. Entsprechend sind nachfolgend beschriebene bevorzugte Verfahrensmerkmale auch als bevorzugte Ausgestaltungsmerkmale der Formmaschine zu verstehen.

Gemäß dem erfindungsgemäßen Verfahren wird eine fließfähige, und vorzugsweise erwärmte, Masse, aus welcher die Produkte geformt werden sollen, mit einer Viskosität im Bereich von 10000 bis 80000 mPas bereitgestellt. In einer speziellen Verfahrensvariante wird die Masse ferner erwärmt und temperiert. Die Masse ist mit dieser Viskosität ausreichend fließfähig, um die Produkte durch Einfüllen der Masse in Formvertiefungen auszuformen, aber kann schnell derart aushärten , dass sich die Oberfläche der Masse verfestigt, sodass das Produkt aus den Formvertiefungen entnommen werden kann. Die bereitgestellte fließfähige Masse wird, ggf. im erwärmten Zustand, in die Formvertiefungen einer rotierenden Formwalze eingebracht. Dies erfolgt bevorzugt an der Oberseite der Formwalze, sodass die fließfähige Masse in die Formvertiefungen eingegossen oder eingestrichen werden kann. Während der Drehung der Formwalze verfestigt sich die Masse in den Formvertiefungen derart, dass das Produkt danach aus der Formvertiefungen entnehmbar ist. Dabei muss die Masse nicht vollständig aushärten, es ist ausreichend, dass sich die Oberfläche der Masse so verfestigt, dass das Produkt formstabil ist und aus der Formvertiefung entnommen werden kann. Das Verfestigen kann zum Beispiel durch Abkühlen und/oder Gelieren erfolgen.

Bevorzugt wird die fließfähige Masse in einem Füllbereich in die Formvertiefungen eingefüllt. Dieser Füllbereich ist bevorzugt an der Oberseite Formwalze gelegen. In einem Entnahmebereich werden die geformten Produkte aus den Formvertiefungen entnommen. Der Entnahmebereich ist dabei von dem Füllbereich in Umfangsrichtung der Formwalze bevorzugt in einem Winkel von mindestens 90°, weiter bevorzugt in einem Winkel ≥ 150°, idealerweise in einem Winkeln von im Wesentlichen 180° beabstandet. Auf diese Weise wird erreicht, dass die Entnahme im Bereich der Unterseite der Formwalze erfolgt. So kann die Entnahme durch die Schwerkraft unterstützt werden. Ferner können die aus den Formvertiefungen entnommenen Produkte direkt auf einem Entnahmeband zu liegen kommen und durch Bewegung des Entnahmebandes in horizontaler Richtung weggefördert werden. Das Entnahmeband liegt, wie oben anhand der Formmaschine beschrieben, bevorzugt in einem Umfangsbereich an der Formwalze an, sodass es zu einer Anhaftung von den Produkten an dem Entnahmeband kommen kann.

Bevorzugt werden die Produkte aus den Formvertiefungen von außen durch ein an den Produkten anhaftendes Entnahmeelement, z.B. das genannte Entnahmeband, herausgezogen, ohne weitere Mechaniken zum Entformen.

Gemäß einer weiteren Ausgestaltung des Verfahrens wird die fließfähige Masse erwärmt in die Formvertiefungen eingebracht. Vorzugsweise hat die erwärmte fließfähige Masse beim Einfüllen in die Formvertiefungen eine Temperatur ≤ 90°C. Eine möglichst niedrige Einfülltemperatur begünstigt das schnelle Aushärten beziehungsweise Verfestigen in den Formvertiefungen. Bei Entnahme aus den Formvertiefungen haben die Produkte vorzugsweis eine Temperatur ≤ 50°C, wobei die Temperaturen und die Masse so aufeinander abgestimmt sind, dass das Produkt bei der Entnahme aus den Formvertiefungen eine ausreichende Festigkeit aufweist, um eigenstabil zu sein. Besonders bevorzugt erfolgt somit eine Abkühlung von ungefähr 40°C zwischen dem Einfüllen und der Entnahme. Dieser Abkühlprozess kann durch Konvektion und/oder zusätzliche Kühlung, beispielsweise Kühlung der Formwalze erfolgen. Nach der Entnahme können die Produkte weiter abgekühlt werden.

Nachfolgend wird die Erfindung beispielhaft anhand der beigefügten Figuren beschrieben. In diesen zeigt:
- Fig. 1: eine schematische Schnittansicht einer Formmaschine gemäß einer ersten Ausführungsform der Erfindung,
- Fig. 2: eine schematische Schnittansicht einer Formmaschine gemäß einer zweiten Ausführungsform der Erfindung, und
- Fig. 3: eine Ausschnittvergrößerung aus Figur 1.

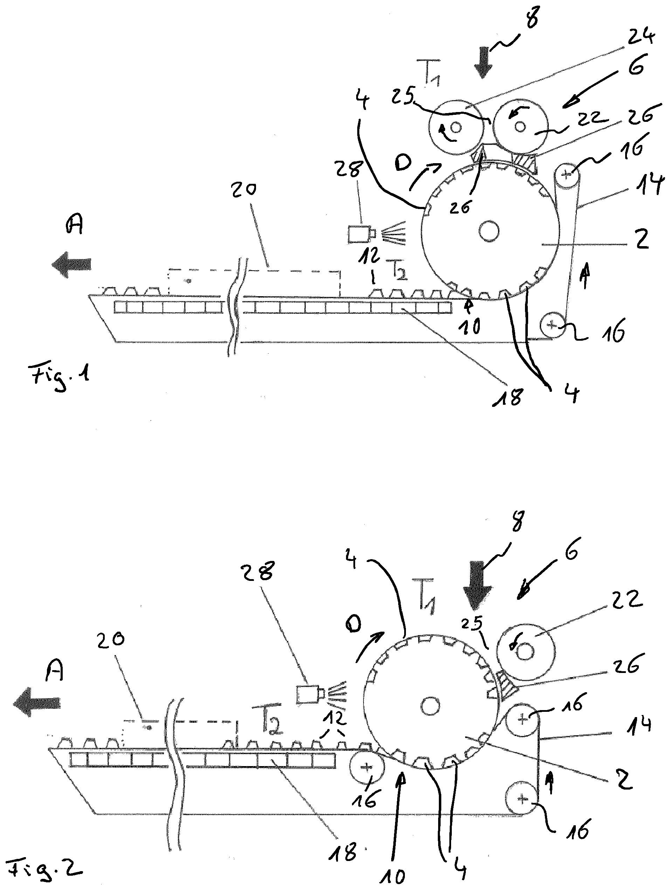

Die erfindungsgenmäße Formmaschine weist in beiden Ausführungsbeispielen gemäß Figuren 1 und 2 eine Formwalze 2 auf, welche derart drehend angetrieben ist, dass sie sich in der Drehrichtung D dreht. Über den Umfang der Formwalze 2 verteilt sind in die Mantel- bzw. Oberfläche der Formwalze Formvertiefungen 4 eingebracht, welche die Negativformen für die zu formenden Produkte bilden. Oberhalb der Formwalze 2 ist bei beiden Ausführungsbeispielen ein Füllbereich 6 gelegen, in welchem die zu formende Masse 8 in die Formvertiefungen 4 der Formwalze 2 eingebracht wird. An der Unterseite der Formwalze 2 ist ein Entnahmebereich 10 gelegen, in welchem die fertig geformten Produkte 12 aus den Formvertiefungen 4 entnommen werden.

Zur Entnahme der Produkte 12 aus den Formvertiefungen 4 dient in beiden Ausführungsbeispielen allein ein Entnahmeband 14, welches über Rollen 16 so geführt ist, dass es in einem Umfangsbereich die Formwalze 2 umschließt und sich in diesem Bereich gemeinsam mit der Formwalze 2 so bewegt, dass das Entnahmeband 14 und die Mantelfläche der Formwalze 2 sich mit derselben Geschwindigkeit bewegen. Das Entnahmeband 14 umschließt in diesen Ausführungsbeispielen die Formwalze 2 in einem Winkel von im Wesentlichen 90° zwischen dem Füllbereich 6 und den Entnahmebereich 10. In diesem Umschlingungsbereich kommt das Entnahmeband 14 mit den Produkten 12 in den Formvertiefungen 4 zur Anlage und die Produkte 12 haften an der Oberfläche des Entnahmebandes 14 an. In dem Entnahmebereich 10, in welchem sich das Entnahmeband 14 von der Formwalze 2 im Wesentlichen in tangentialer Richtung wegerstreckt, werden die Produkte 12 aus den Formvertiefungen 4 heraus bewegt bzw. herausgezogen und auf dem Entnahmeband 14 in Richtung des Pfeils A weiter abtransportiert. Das Entformen erfolgt somit ohne weitere Entformungsmittel oder Mechaniken allein durch Herausziehen der Produkte 12 aus den Formvertiefungen 4 mittels des Entnahmebandes 14. In dem sich an den Entnahmebereich 10 anschließenden Bereich kann unter dem Entnahmeband 14 eine Kühleinrichtung 18 angeordnet sein. Alternativ oder zusätzlich kann das Entnahmeband 14 durch einen Kühltunnel 20 laufen, sodass die geformten Produkte 12 durch den Kühltunnel 20 gefördert werden. Über die Kühleinrichtung 18 und/oder den Kühltunnel 20 werden die Produkte 12 gekühlt, sodass sie weiter aushärten können.

Für die Zufuhr der zu formenden Masse in viskosen oder flüssigen Zustand in einem Viskositätsbereich zwischen 10000 und 80000 mPas sind im ersten Ausführungsbeispiel gemäß Figur 1 zwei Füllwalzen 22, 24 vorgesehen. Die Füllwalzen 22, 24 sind in ihrem Durchmesser kleiner als die Formwalze 2 und erstrecken sich mit in ihren Drehachsen parallel zur Drehachse der Formwalze 2. Die in Drehrichtung D der Formwalze 2 vordere Füllwalze 22 dreht sich entgegengesetzt zu der Formwalze 2, während sich die beabstandete hintere Füllwalze 24 gleichläufig zu der Formwalze 2 dreht. So drehen sich die Füllwalzen 22 und 24 so, dass die Masse 8 in Richtung des Pfeils in den Freiraum 25 zwischen den Füllwalzen 22 und 24 gedrückt beziehungsweise gezogen wird. Die Masse wird mit einer Temperatur T₁ zugeführt, welche vorzugsweise ≤ 90°C ist. Zumindest eine der Füllwalzen 22, 24, bevorzugt beide Füllwalzen 22, 24 sind beheizt, um die Masse 8 auf der Temperatur T₁ zu halten und zu verhindern, dass sich die Masse 8 in dem Freiraum 25 verfestigt, bevor sie in die Formvertiefungen 4 eingebracht wird. Die Füllwalzen 22, 24 sind in radialer Richtung von der Formwalze 2 beabstandet, wobei die dadurch entstehenden Abstände zwischen den Füllwalzen 22, 24 und der Formwalze 2 durch Abstandselemente 26 verschlossen sind. Die Abstandselemente 26 liegen an der Mantelfläche der Formwalze 2 und an den Mantel- bzw. Oberflächen jeweils einer Füllwalze 22, 24 an. In dem Freiraum 25 zwischen den beiden Abstandselementen 26 wird die Masse 8 in die Formvertiefungen 4 eingebracht und durch die Abstandselemente 26 von der Mantelfläche der Formwalze 2 im Umgebungsbereich der Formvertiefungen 4 abgestrichen. Auch die Abstandselemente 26 können zur Temperierung der Masse 8 geheizt sein. Die flüssige beziehungsweise viskose Masse wird mit der Temperatur T₁ in die Formvertiefungen 4 eingebracht und erstarrt beziehungsweise verfestigt sich zwischen dem Füllbereich 6 und dem Entnahmebereich 10 während der Drehung der Formwalze 2 in der Drehrichtung D. Bei der Entnahme haben die Produkte 12 eine Temperatur T₂ welche bereits ≤ 50°C ist. Bei dieser Temperatur ist insbesondere die Außenseite der Produkte 12 so weit verfestigt, dass die Produkte 12 eigenstabil sind und eigenstabil auf dem Entnahmeband 14 liegen und dort weiter abgekühlt werden können. Vor dem Befüllen der Formvertiefungen 4 kann die Formwalze 2 über eine Sprüheinrichtung 28 mit einem Trennmittel eingesprüht werden, welches die Haftung der Masse 8 in den Formvertiefungen 4 reduziert und die Entnahme der Produkte12 begünstigt.

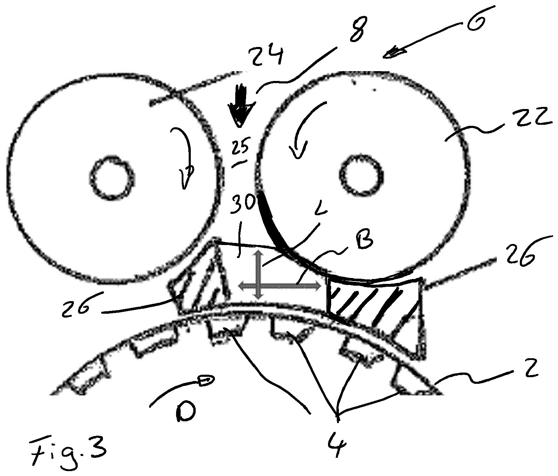

Figur 3 zeigt eine Ausschnittvergrößerung des Füllbereiches 6 aus dem Ausführungsbeispiel gemäß Figur 1. Die beiden Abstandselemente 26 bilden gemeinsamen einen Füllblock mit einer Öffnung 30 in seinem Inneren. Durch die Öffnung 30 wird die Masse 8 aus dem Freiraum 25 zwischen den Füllwalzen 22, 24 den Formvertiefungen 4 beziehungsweise Formnestern 4 zugeführt. Die Öffnung 30 in dem Füllblock beziehungsweise zwischen den Abstandselementen 26 ist so dimensioniert, dass das Verhältnis zwischen der Länge L in der Strömungsrichtung der Masse 8 zu der Breite B in der Drehrichtung D der Formwalze 2 vorzugsweise in einem Verhältnis L/D zwischen 1/1,25 und 1/0,77 beträgt.

In dem Ausführungsbeispiel gemäß Figur 2 ist der Füllbereich 6 anders als in dem Ausführungsbeispiel gemäß Figur 1 ausgestaltet, nämlich mit leidglich einer Füllwalze 22 und nur einem Abstandselement 26 zwischen dieser Füllwalze 22 und der Formwalze 2. Die Füllwalze 22 ist gegenüber dem ersten Ausführungsbeispiel in der Drehrichtung D der Formwalze 2 etwas nach unten verschoben angeordnet, sodass zwischen der Füllwalze 22 und der Formwalze 2 ein Freiraum 25 entsteht, in welchen die Masse 8 eingefüllt wird. Auch hier sind die Füllwalze 22 und gegebenenfalls das Abstandselement 26 temperiert, um die Masse 8 mit der definierten Temperatur T₁ in flüssiger beziehungsweise viskoser Form einzufüllen, wobei die Masse 8 anschließend bei der weiteren Drehung der Formwalze 2 in den Formvertiefungen 4 fest wird, bevor die Formvertiefungen 4 den Entnahmebereich 10 erreichen.

### Bezugszeichenliste

- 2: Formwalze
- 4: Formvertiefungen
- 6: Füllbereich
- 8: Masse
- 10: Entnahmebereich
- 12: Produkt
- 14: Entnahmeband
- 16: Rollen
- 18: Kühleinrichtung
- 20: Kühltunnel
- 22,24: Füllwalzen
- 25: Freiraum
- 26: Abstandselemente, Füllblock
- 28: Sprüheinrichtung
- 30: Öffnung
- A: Förderrichtung
- D: Drehrichtung
- L: Länge
- B: Breite

## Patentansprüche

1. Formmaschine zum Herstellen von formstabilen Produkten aus einer Masse (8) mit einer Viskosität im Bereich von 10000 bis 80000 mPas, aufweisend
eine rotierend angetriebene Formwalze (2), in deren Mantelfläche Formvertiefungen (4) ausgebildet sind,
zumindest eine beabstandet zu der Formwalze (2) angeordnete, rotierend angetriebenen und beheizten Füllwalze (22,24) , deren Drehachse sich parallel zu einer Drehachse der Formwalze (2) erstreckt,
ein zwischen der Füllwalze (22,24) und der Formwalze (2) angeordnetes Abstandselement (26), welches mit der Mantelfläche der Füllwalze (22, 24) und mit der Mantelfläche der Formwalze (2) in Kontakt ist, und
ein die Formwalze (2) in einem Umfangsbereich umschließendes und sich in einem Entnahmebereich (10) von der Formwalze (2) wegerstreckenden Entnahmeband (14).

2. Formmaschine nach Anspruch 1, bei welcher die Formwalze (2) und die Füllwalze (22, 24) mit zumindest einem Drehantrieb verbunden sind, welcher die Formwalze (2) und zumindest eine Füllwalze (22, 24) in entgegengesetzten Drehrichtungen antreibt.

3. Formmaschine nach Anspruch 1 oder 2, bei welcher das Entnahmeband (14) derart angetrieben ist, dass sich die Bandoberfläche in dem die Formwalze (2) umschließenden Umfangsbereich mit der Mantelfläche der Formwalze (2) bewegt.

4. Formmaschine nach einem der vorangehenden Ansprüche mit zumindest einer geheizten Produktzuführeinrichtung, welche dazu ausgebildet ist, die Masse (8) definiert zu temperieren, vorzugsweise auf eine Temperatur (T1) ≤ 90°C, mit einer Viskosität zwischen 10000 und 80000 mPas bereitzustellen und der Füllwalze (22, 24) zuzuführen.

5. Formmaschine nach einem der vorangehenden Ansprüche, bei welcher das Entnahmeband (14) zumindest in einem Abschnitt, welcher in dem sich von der Formwalze (2) wegerstreckenden Teil gelegen ist, gekühlt ist, vorzugsweise auf eine Temperatur (T2) ≤ 20°C oder ≤10°C, wobei weiter bevorzugt das Entnahmeband (14) sich in seinem von der Formwalze (2) wegerstreckenden Teil durch einen Kühltunnel (20) erstreckt und/oder unterhalb des Entnahmebandes (14) eine Kühleinrichtung (18) angeordnet ist.

6. Formmaschine nach einem der vorangehenden Ansprüche, bei welcher die Formvertiefungen (4) und das Entnahmeband (14) derart ausgestaltet sind, dass eine Haftkraft zwischen Entnahmeband (14) und einem aus der Masse (8) geformten Produkt (12) größer ist als eine Haftkraft zwischen der Formvertiefung (4) und dem aus der Masse (8) geformten Produkt (12).

7. Formmaschine nach einem der vorangehenden Ansprüche, bei welcher die Formvertiefungen (4) jeweils eine geschlossenen Oberfläche aufweisen, welche vorzugsweise frei von Entformungsmitteln ist.

8. Formmaschine nach einem der vorangehenden Ansprüche, welche zwei voneinander beabstandete beheizte und rotierend angetriebene Füllwalzen (22, 24) aufweist, wobei jeweils ein Abstandselement (26) zwischen der Füllwalze (22, 24) und der Formwalze (2) angeordnet ist, welches mit der Mantelfläche einer der Füllwalzen (22, 24) und mit der Mantelfläche der Formwalze (2) in Kontakt ist.

9. Formmaschine nach einem der vorangehenden Ansprüche, bei welcher der Entnahmebereich (10) von dem Abstandselement (26) an der zumindest einen Füllwalze (22, 24) in Umfangsrichtung (D) der Formwalze (2) um einen Winkel von mindestens 90°, vorzugsweise mindestens 150° beabstandet ist.

10. Verfahren zum Herstellen von formstabilen Produkten aus einer Masse (8) mit einer Viskosität im Bereich von 10000 bis 80000 mPas, mit folgenden Schritten:
Bereitstellen einer fließfähigen Masse (8) mit einer Viskosität im Bereich von 10000 bis 80000 mPas,
Einbringen der fließfähigen Masse (8) in Formvertiefungen (4) einer rotierenden Formwalze (2),
Aushärten der Masse (8) innerhalb der Formvertiefungen (4) während der Drehung der Formwalze (2), wobei sich die Masse (8) derart verfestigt, dass sie aus den Formvertiefungen (4) entnehmbar wird,
Entnehmen der aus der verfestigten Masse (8) gebildeten Produkte (12) aus den Formvertiefungen (4).

11. Verfahren nach Anspruch 10, bei welchem die fließfähige Masse (8) in einem Füllbereich (6) in die Formvertiefungen (4) eingefüllt und in einem Entnahmebereich (10) aus den Formvertiefungen (4) entnommen wird, wobei der Entnahmebereich (10) von dem Füllbereich (6) in Umfangsrichtung (D) der Formwalze (2) in einem Winkel von mindestens 90°, vorzugsweise mindestens 150° beabstandet ist.

12. Verfahren nach Anspruch 10 oder 11, bei welchem die Masse (8) erwärmt in die Formvertiefungen (4) eingebracht wird und in den Formvertiefungen (4) abkühlt.

13. Verfahren nach einem der Ansprüche 10 bis 12, bei welchem die fließfähige Masse (8) beim Einfüllen in die Formvertiefungen (4) eine Temperatur (T1) ≤ 90°C und/oder die Produkte (12) bei der Entnahme aus den Formvertiefungen (4) eine Temperatur (T2) ≤ 50°C aufweisen.

14. Verfahren nach einem der Ansprüche 10 bis 13, bei welchem die Kühlung der Masse (8) in den Formvertiefungen (4) durch Konvektion und/oder Kühlung der Formwalze (2) erfolgt.

15. Verfahren nach einem der Ansprüche 10 bis 14, bei welchem die Produkte aus den Formvertiefungen von außen durch ein an den Produkten anhaftendes Entnahmeelement, vorzugsweise in Form eines Entnahmebandes, herausgezogen werden.
